# DEMANDE DE BREVET EUROPEEN

(11) **EP 1 454 882 A1**
(43) Date de publication de la demande: **08.09.2004**
(21) Numéro de dépôt: 04300080.1
(22) Date de dépôt: 13.02.2004
(51) Int. Cl.: C01B 37/00, C01B 39/06

(54) **Solide cristallisé IM-10 et son procédé de préparation**

(30) Priorité: 05.03.2003 FR 0302735
(71) Demandeur: Institut Français du Pétrole, 92852 Rueil-Malmaison Cedex (FR)
(72) Inventeur: Mathieu, Yannick C.N.R.S., 68000 Colmar (FR); Paillaud, Jean-Louis C.N.R.S., 68100 Mulhouse (FR); Caullet, Philippe C.N.R.S., 68110 Illzach (FR); Bats, Nicolas, 69590 Pomeys (FR); Simon, Laurent, 69003 Lyon (FR)

(57) **Abrégé**

L'invention concerne un solide cristallisé, désigné sous l'appellation IM-10, lequel présente un diagramme de diffraction de rayons X tel que donné ci-dessous. Le dit solide présente une composition chimique exprimée sur une base anhydre, en termes de mole d'oxydes, par la formule XO₂ : m YO₂ : p Z₂O₃ : q R_{2/n}O : s F, où R représente un ou plusieurs cation(s) de valence n, X représente un ou plusieurs élément(s) tétravalent(s) différent(s) du germanium, Y représente le germanium, Z représente au moins un élément trivalent, F est le fluor.

## Description

### Domaine technique

La présente invention se rapporte à un nouveau solide cristallisé appelé ci-après IM-10 présentant une nouvelle structure cristalline ainsi qu'au procédé de préparation dudit solide.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.

Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant: "Atlas of Zeolites Structure Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511).

Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par J.-L. Guth et al. (Proc. Int. Zeol. Conf., Tokyo, 1986, p. 121). Les pH des milieux de synthèses sont typiquement proche de la neutralité. Un des avantages de ces systèmes réactionels fluorés est de permettre l'obtention de zéolithes purement siliciques contenant moins de défauts que les zéolithes obtenues en milieu OH- traditionnel (J.M. Chézeau et al., Zeolites, 1991, 11, 598). Un autre avantage décisif lié à l'utilisation de milieux réactionnels fluorés est de permettre l'obtention de nouvelles topologies de charpente contenant des doubles cycles à quatre tétraèdres comme c'est le cas des zéolithes ITQ-7, ITQ-13, ITQ-17. De plus, l'utilisation du germanium dans ces milieux de synthèse favorise également l'obtention d'une telle charpente comme dans le cas de la zéolithe ITQ-21.

### Description de l'invention

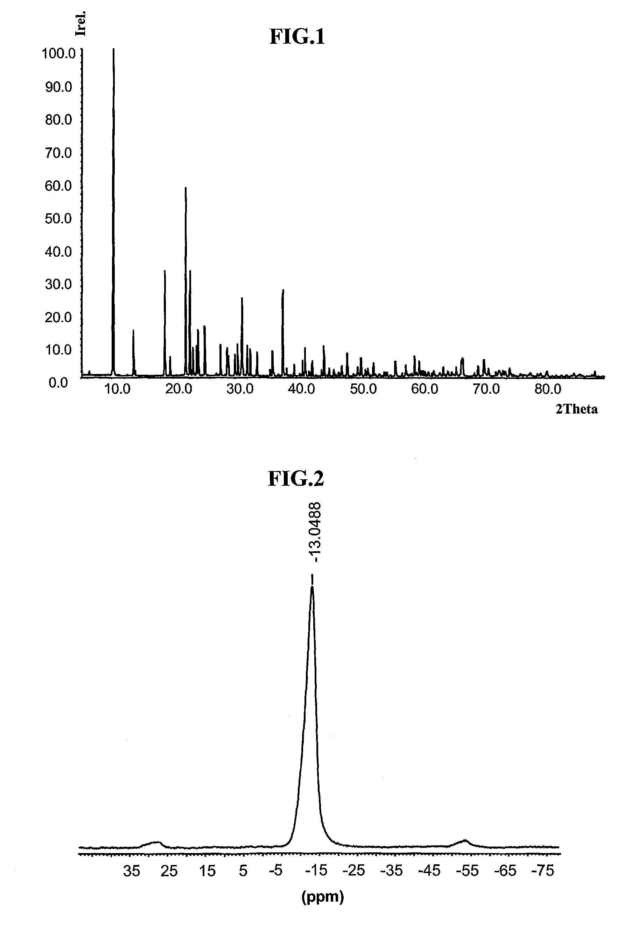

La présente invention se rapporte à un nouveau solide cristallisé, appelé solide cristallisé IM-10, et présentant un diagramme de diffraction de rayons X incluant au moins les raies inscrites dans le tableau 1. Ce diagramme est donné sur la figure 1. Ce nouveau solide cristallisé IM-10 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IM-10 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**Tableau 1 :**

| Valeur moyennes des dₕₖₗ et intensités relatives mesurées sur un diagramme de diffraction de rayons X du solide cristallisé IM-10 de l'invention | | |
|---|---|---|
| dₕₖₗ (Å) | 2 thêta (°) | I/I₀ |
| 14,18 | 6,23 | ff |
| 8,67 | 10,19 | FF |
| 7,07 | 12,50 | ff |
| 6,55 | 13,50 | F |
| 6,44 | 13,73 | ff |
| 5,87 | 15,09 | ff |
| 4,76 | 18,60 | mf |
| 4,55 | 19,47 | ff |
| 4,03 | 22,02 | m |
| 3,91 | 22,69 | mf |
| 3,83 | 23,20 | ff |
| 3,74 | 23,77 | ff |
| 3,69 | 24,04 | f |
| 3,54 | 25,12 | f |
| 3,30 | 26,93 | ff |
| 3,28 | 27,18 | ff |
| 3,22 | 27,68 | ff |
| 3,10 | 28,74 | ff |
| 3,08 | 28,92 | ff |
| 2,97 | 30,00 | ff |
| 2,93 | 30,46 | ff |
| 2,89 | 30,92 | ff |
| 2,88 | 31,03 | ff |
| 2,87 | 31,17 | f |
| 2,80 | 31,98 | ff |
| 2,75 | 32,47 | ff |
| 2,67 | 33,56 | ff |
| 2,52 | 35,64 | ff |
| 2,49 | 36,03 | ff |
| 2,48 | 36,20 | ff |
| 2,44 | 36,79 | ff |
| 2,43 | 36,98 | ff |
| 2,38 | 37,72 | f |
| 2,36 | 38,07 | ff |
| 2,34 | 38,31 | ff |

où FF = très fort ; m = moyen ; f = faible ; F = fort ; mf = moyen faible ; ff = très faible.

L'intensité relative I/I₀ est donnée en rapport à une échelle d'intensité relative où il est attribué une valeur de 100 à la raie la plus intense du diagramme de diffraction des rayons X : ff <15 ; 15 ≤f<30 ; 30 ≤ mf<50 ; 50 ≤m < 65 ; 65 ≤F < 85 ; FF ≥ 85.

Le solide cristallisé IM-10 selon l'invention présente une nouvelle structure cristalline de base ou topologie qui est caractérisée par son diagramme de diffraction X donné par la figure 1. La nouvelle structure cristalline du solide cristallisé IM-10 selon l'invention est une structure tridimentionnelle formée de tétraèdres. Elle comprend notamment des unités de type double cycles à quatre tétraèdres mises en évidence par spectroscopie de résonance magnétique nucléaire de l'élément ¹⁹F (figure 2). Le sommet de chaque tétraèdre est occupé par un atome d'oxygène. Le solide cristallisé IM-10 selon l'invention a la topologie d'un clathrasil avec des cages renfermant le structurant organique utilisé pour la synthèse dudit solide IM-10. Chaque cage est formé de 20 cycles à 6 tétraèdres et 10 cycles à 4 tétradrèdres [6²⁰,4¹⁰]. Chaque cycle à 4 tétradrèdres est connecté à un autre cycle à 4 tétraèdres pour former un double cycle à 4 tétraèdres (D4R) lequel renferme un ion fluorure. Chaque double cycle à 4 tétraèdres est commun à deux cages.

Ledit solide IM-10 présente une composition chimique, exprimée sur une base anhydre, en termes de mole d'oxydes, définie par la formule générale suivante : XO₂ : m YO₂ : p Z₂O₃ : q R_{2/n}O : s F (I) dans laquelle R représente un ou plusieurs cation(s) de valence n, X représente un ou plusieurs élément(s) tétravalent(s) différent(s) du germanium, Y représente le germanium, Z représente au moins un élément trivalent, F est le fluor. Dans la formule (I), m, p, q, s représentent respectivement le nombre de mole de YO₂, Z₂O₃, R_{2/n}O et F. m, p, q et s peuvent être nuls.

Avantageusement, le rapport Ge/X de la charpente du solide cristallisé IM-10 selon l'invention est compris entre 0,7 et 4 et de préférence entre 0,7 et 3. De manière préférée, m est compris entre 0,1 et 4 et de manière encore plus préférée, m est compris entre 0,3 et 3. Le rapport {(1+m)/p} est supérieur ou égal à 5 et est de manière préférée supérieur ou égal à 7. La valeur de p est préférentiellement comprise entre 0 et 0,5, très préférentiellement comprise entre 0 et 0,4 et de manière encore plus préférée comprise entre 0,01 et 0,4. Les valeurs de q et s sont avantageusement comprises entre 0,01 et 0,7 et très avantageusement comprises entre 0,1 et 0,5.

Conformément à l'invention, X est préférentiellement choisi parmi le silicium, l'étain et le titane, et Z est préférentiellement choisi parmi l'aluminium, le bore, le fer, l'indium et le gallium et très préférentiellement Z est l'aluminium. De manière préférée, X est le silicium : le solide cristallisé IM-10 selon l'invention est alors un métallosilicate cristallisé présentant un diagramme de diffraction des rayons X identique à celui décrit dans le tableau 1. De manière encore plus préférée, X est le silicium et Z est l'aluminium : le solide cristallisé IM-10 selon l'invention est alors un aluminosilicate cristallisé présentant un diagramme de diffraction des rayons X identique à celui décrit dans le tableau 1.

Dans le cas où le solide cristallisé IM-10 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide IM-10 comporte au moins un cation organique azoté tel que celui décrit ci-après ou ses produits de décomposition, ou encore ses précurseurs. Sous forme brute de synthèse, le (ou les) cation(s) R présent(s) dans la formule (I) est(sont) au moins en partie, et de préférence entièrement, le(s)dit(s) cation(s) organique(s) azoté(s). Selon un mode préféré de l'invention, R est un cation de formule [(H₃C)₃-N-(CH₂)ₓ N-(CH₃)₃]²⁺ où x est compris entre 4 et 8, de préférence il s'agit du cation hexaméthonium (x=6), dans le cas où le solide cristallisé IM-10 est sous forme brute de synthèse. Le cation [(H₃C)₃-N-(CH₂)ₓ N-(CH₃)₃]²⁺, x étant compris entre 4 et 8, de préférence l'hexaméthonium (x=6), joue le rôle de structurant organique. Ce structurant utilisé lors de la préparation du solide cristallisé IM-10, telle que décrite plus loin dans la description, compense la charge négative de la charpente. Le structurant peut être éliminé par les voies classiques de l'état de la technique comme des traitements thermiques et/ou chimiques. Selon un autre mode préféré de l'invention, le cation [(H₃C)₃-N-(CH₂)ₓ-N-(CH₃)₃]²⁺, x étant compris entre 4 et 8, de préférence l'hexaméthonium (x=6), est mélangé à un autre cation, préférentiellement un cation alcalin, par exemple le sodium, dans le cas où le solide IM-10 est sous forme brute de synthèse.

Le solide cristallisé IM-10 selon l'invention est de préférence un solide zéolithique.

L'invention concerne également un procédé de préparation du solide cristallisé IM-10 dans lequel on fait réagir un mélange aqueux comportant au moins une source d'au moins un oxyde XO₂, éventuellement au moins une source de l'oxyde YO₂, éventuellement au moins une source d'au moins un oxyde Z₂O₃, et éventuellement au moins une source d'un oxyde M_{2/w}O et au moins un cation organique azoté R, ou au moins un précurseur du cation organique azoté ou au moins un produit de décomposition du cation organique azoté, le mélange présentant préférentiellement la composition molaire suivante :
- (XO₂+YO₂)/Z₂O₃ :: au moins 5, de préférence au moins 7,
- M_{2/w}O/(XO₂+YO₂) :: 0 à 3, de préférence 0 à 1, et de manière très préférée 0,01 à 1
- H₂O/(XO₂+YO₂) :: 1 à 50, de préférence 2 à 30,
- R/(XO₂+YO₂) :: 0,1 à 3, de préférence 0,1 à 1,
- F/(XO₂+YO₂) :: 0,1 à 3, de préférence 0,1 à 1,
- YO₂/XO₂ :: 0 à 1, de préférence 0,5 à 1,

LₐS/XO₂ : 0 à 0,5, de préférence 0 à 0,3, et de manière très préférée de 0,02 à 0,3. où X est un ou plusieur(s) élément(s) tétravalent(s) différent(s) du germanium , de préférence le silicium, Y est le germanium, Z est un ou plusieurs élément(s) trivalent(s) choisi(s) dans le groupe formé par les éléments suivants : aluminium, fer, bore, indium et gallium, de préférence l'aluminium, M est un cation de valence w pouvant comporter un cation de métal alcalin et/ou de l'ammonium. LₐS est un sel, S étant un anion de valence a et L étant un ion de métal alcalin ou ammonium qui peut être similaire à M ou un mélange de M et d'un autre ion de métal alcalin ou un ion ammonium nécessaire pour équilibrer l'anion S, S pouvant comporter un radical acide ajouté par exemple sous la forme d'un sel de L ou d'un sel d'aluminium. Le cation M utilisé est de préférence un métal alcalin, notamment du sodium. On peut citer à titre d'exemple pour S des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Bien que le LₐS ne soit pas essentiel, il peut accélérer la cristallisation du solide IM-10 selon l'invention à partir du mélange réactionnel et il peut également affecter la taille et la forme des cristaux constituant le solide IM-10. Dans tous les cas, la réaction se poursuit jusqu'à obtention de la cristallisation.

Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆.

Conformément au procédé selon l'invention, R est un structurant organique azoté. Préférentiellement, R est le composé cationique organique azoté [(H₃C)₃-N-(CH₂)ₓ-N-(CH₃)_{3]}²⁺ où x est compris entre 4 et 8, de préférence le composé cationique hexaméthonium (x=6), ou au moins un précurseur du [(H₃C)₃-N-(CH₂)ₓ N-(CH₃)₃]²⁺ ou au moins un produit de décomposition du [(H₃C)₃-N-(CH₂)ₓ N-(CH₃)₃]²⁺. Il s'agit préférentiellement d'un sel d'hexaméthonium tel que par exemple l'halogénure, l'hydroxyde, le sulfate, le nitrate, l'acétate, le silicate ou l'aluminate. De préférence le sel d'hexaméthonium est un hydroxyde.

Le cation M et/ou le structurant organique peu(ven)t être ajouté(s) sous forme d'hydroxydes ou de sels d'acides minéraux à condition que les rapports M_{2/w}O/(XO₂+YO₂) et R/(XO₂+YO₂) soient respectés.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". Les silices dissoutes qui peuvent être employées comprennent également les silicates au verre soluble disponibles dans le commerce, contenant 0,5 à 6,0, notamment 2,0 à 4,0 moles de SiO₂ par mole d'oxyde de métal alcalin, des silicates de métaux alcalins "actifs" tels que définis dans le brevet britannique GB-1.193.254, et des silicates obtenus par dissolution de silice dans un hydroxyde de métal alcalin ou un hydroxyde d'ammonium quaternaire, ou encore un mélange de ceux-ci. De manière préférée, la source de silicium est le TEOS.

La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Certaines ou l'ensemble des sources d'alumine et de silice peuvent éventuellement être ajoutées sous forme d'aluminosilicate.

La source d'élément Y pourra être par exemple un oxyde de germanium GeO₂.

Selon un mode de réalisation préféré du procédé selon l'invention, on fait réagir un mélange aqueux comportant de la silice, de l'alumine, un oxyde de germanium, de l'acide fluorhydrique et de l'hydroxyde d'hexaméthonium.

Le procédé selon l'invention consiste à préparer un mélange réactionnel aqueux appelé gel et renfermant au moins une source d'au moins un oxyde XO₂, éventuellement au moins une source de l'oxyde YO₂ éventuellement au moins une source d'au moins un oxyde Z₂O₃, éventuellement au moins une source d'un oxyde M_{2/w}O et au moins un cation organique azoté R, ou au moins un précurseur du cation organique azoté ou au moins un produit de décomposition du cation organique azoté. Les quantités desdits réactifs sont ajustées de manière à conférer à ce gel une composition permettant sa cristallisation en solide cristallisé IM-10 de formule XO₂ : m YO₂ : p Z₂O₃ : q R_{2/n}O : s F, où m, p, q, n et s répondent aux critères définis plus haut. Puis le gel est soumis à un traitement hydrothermal jusqu'à ce que le solide cristallisé IM-10 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore préférentielle à une température qui ne dépasse pas 175°C jusqu'à la formation des cristaux de solide IM-10 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé IM-10 au détriment d'impuretés. De tels germes comprennent des solides cristallisés, notamment des cristaux de solide IM-10. Les germes cristallins sont généralement ajoutés dans une proportion comprise entre 0,01 et 10 % du poids de l'oxyde XO₂, de préférence de la silice, utilisé dans le mélange réactionnel.

A la fin de la réaction, la phase solide est filtrée et lavée; elle est ensuite prête pour des étapes ultérieures telles que le séchage, la déshydratation et la calcination et/ou l'échange d'ions.

L'invention est illustrée au moyen des exemples suivants.

### Exemple 1 :

On verse dans un bécher en polypropylène 4,257g de solution aqueuse à 15,4% d'hydroxyde d'héxamethonium (ROH) et 1,16g de tétraéthoxysilane (Aldrich). Après la dissolution sous agitation du tétraéthoxysilane, 0,58g d'oxyde de germanium amorphe (Aldrich) sont ajoutés. On évapore à température ambiante et sous agitation l'éthanol et l'excès d'eau jusqu'à ce que l'on atteigne une masse de 1,83g. On ajoute alors 0,28g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.

La composition molaire du gel est 0,5 SiO₂ : 0,5 GeO₂ : 0,25 ROH : 0,5 HF : 5 H₂O.

L'autoclave est chauffé pendant 7 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 9. Après filtration, le produit est lavé à l'eau distillée et séché à 70°C.

Le produit solide séché a été analysé par diffraction X de poudres et identifié comme étant constitué de solide IM-10. Le diffractogramme effectué sur l'échantillon brut de synthèse est donné dans la figure 1. L'analyse chimique du produit par fluorescence X a été effectuée et donne le rapport SiO₂/GeO₂ = 0,33.

### Exemple 2:

On verse dans un bécher en polypropylène 4,257g d'une solution aqueuse d'hydroxyde d'héxaméthonium (ROH) à 15,4% en masse dans l'eau. On ajoute ensuite 0,0260g d'hydroxyde d'aluminium (à 64,5-67% en masse d'Al₂O₃) et 0,58g d'oxyde de germanium amorphe (Aldrich). Après la dissolution sous agitation des oxydes, 1,16g de tétraéthoxysilane sont ajoutés. On évapore à température ambiante et sous agitation l'éthanol et l'excès d'eau jusqu'à ce que l'on atteigne une masse de 1,78g. Après évaporation, on ajoute 0,28g d'acide fluorhydrique à 40% en masse dans l'eau (Fluka). On attend 20 minutes puis on agite manuellement jusqu'à formation d'une pâte homogène. Le gel est ensuite transféré dans une chemise en téflon puis la chemise est placée dans un autoclave de 20 millilitres.

La composition molaire du gel correspond à :
0,5SiO₂: 0,5GeO₂ : 0,01Al₂O₃ : 0,25 ROH : 0,5HF : 5H₂O

L'autoclave est chauffé pendant 7 jours à 170°C dans une étuve dans des conditions agitées. Pendant la synthèse, l'autoclave est continuellement agité, l'axe longitudinal de l'autoclave tournant avec une vitesse d'environ 15 tours/minute dans un plan perpendiculaire à l'axe de rotation. Après filtration, lavage à l'eau distillée et séchage à 70°C, on obtient 300mg de produit. Le produit solide séché a été analysé par diffraction X de poudres et identifié comme étant constitué de solide IM-10. Le diffractogramme effectué sur l'échantillon brut de synthèse est donné dans la figure 1.

## Revendications

1. Solide cristallisé IM-10 présentant un diagramme de diffraction de rayons X incluant au moins les raies inscrites dans le tableau ci-dessous :
| dₕₖₗ (Å) | 2 thêta (°) | I/I₀ |
|---|---|---|
| 14,18 | 6,23 | ff |
| 8,67 | 10,19 | FF |
| 7,07 | 12,50 | ff |
| 6,55 | 13,50 | F |
| 6,44 | 13,73 | ff |
| 5,87 | 15,09 | ff |
| 4,76 | 18,60 | mf |
| 4,55 | 19,47 | ff |
| 4,03 | 22,02 | m |
| 3,91 | 22,69 | mf |
| 3,83 | 23,20 | ff |
| 3,74 | 23,77 | ff |
| 3,69 | 24,04 | f |
| 3,54 | 25,12 | f |
| 3,30 | 26,93 | ff |
| 3,28 | 27,18 | ff |
| 3,22 | 27,68 | ff |
| 3,10 | 28,74 | ff |
| 3,08 | 28,92 | ff |
| 2,97 | 30,00 | ff |
| 2,93 | 30,46 | ff |
| 2,89 | 30,92 | ff |
| 2,88 | 31,03 | ff |
| 2,87 | 31,17 | f |
| 2,80 | 31,98 | ff |
| 2,75 | 32,47 | ff |
| 2,67 | 33,56 | ff |
| 2,52 | 35,64 | ff |
| 2,49 | 36,03 | ff |
| 2,48 | 36,20 | ff |
| 2,44 | 36,79 | ff |
| 2,43 | 36,98 | ff |
| 2,38 | 37,72 | f |
| 2,36 | 38,07 | ff |
| 2,34 | 38,31 | ff |
où FF = très fort ; m = moyen ; f = faible ; F = fort ; mf = moyen faible ; ff = très faible, et présentant une composition chimique exprimée sur une base anhydre, en termes de mole d'oxydes, définie par la formule générale suivante : XO₂ : m YO₂ : p Z₂O₃ : q R_{2/n}O : s F (I) dans laquelle R représente un ou plusieurs cation(s) de valence n, X représente un ou plusieurs élément(s) tétravalent(s) différent(s) du germanium, Y représente le germanium, Z représente au moins un élément trivalent, F est le fluor, m, p, q, s représentant respectivement le nombre de mole de YO₂, Z₂O₃, R_{2/n}O et F et m est compris entre 0,1 et 4, p est compris entre 0 et 0,5, q et s sont compris entre 0,01 et 0,7, le rapport {(1+m)/p} est supérieur ou égal à 5.

2. Solide cristallisé IM-10 selon la revendication 1 dans lequel X est le silicium.

3. Solide cristallisé IM-10 selon la revendication 1 ou 2 dans lequel Z est l'aluminium.

4. Procédé de préparation d'un solide cristallisé IM-10 selon l'une des revendications 1 à 3 consistant à procéder au mélange d'au moins une source d'au moins un oxyde XO₂, éventuellement d'au moins une source de l'oxyde YO₂, éventuellement d'au moins une source d'au moins un oxyde Z₂O₃, éventuellement d'au moins une source d'un oxyde M_{2/w}O et d'au moins un cation organique azoté R, ou d'au moins un précurseur du cation organique azoté ou d'au moins un produit de décomposition du cation organique azoté puis à procéder au traitement hydrothermal dudit mélange jusqu'à ce que ledit solide cristallisé IM-10 se forme.

5. Procédé de préparation d'un solide cristallisé IM-10 selon la revendication 4 tel que la composition molaire du mélange réactionnel est telle que :
(XO₂+YO₂)/Z₂O₃ : au moins 5,
M_{2/w}O/(XO₂+YO₂) : 0 à 3,
H₂O/(XO₂+YO₂) : 1 à 50,
R/(XO₂+YO₂) : 0,1 à 3,
F/(XO₂+YO₂) : 0,1 à 3,
YO₂/XO₂ : 0 à 1,
LₐS/XO₂ : 0 à 0,5,

6. Procédé de préparation selon la revendication 4 ou 5 tel que R est le cation hexaméthonium [(H₃C)₃-N-(CH₂)₆-N-(CH₃)₃]²⁺.

7. Procédé de préparation selon l'une des revendications 4 à 6 tel que des germes sont additionnés dans le mélange réactionnel.
